# EUROPEAN PATENT SPECIFICATION

(11) **EP 2 028 599 B1**
(45) Date of publication and mention of the grant of the patent: **24.09.2014**
(21) Application number: 08161817.5
(22) Date of filing: 05.08.2008
(51) Int. Cl.: G06F 17/30, H04L 29/08

(54) **Synchronising data**
Synchronisierung von Daten
Synchronisation de données

(30) Priority: 06.08.2007 US 834604
(43) Date of publication of application: 25.02.2009
(73) Proprietor: APPLE INC., Cupertino, CA 95014 (US)
(72) Inventor: Sharp, Christopher Brooke, San Jose, CA 95118 (US); Baumgarten, John S., San Jose, CA 95129 (US)
(74) Representative: Wardle, Callum Tarn

(56) References cited:
- GB-A- 2 421 606

## Description

This application claims the benefit of U.S. Utility Application No. 11/834,604 entitled "SYNCHING DATA" and filed on August 6, 2007.

### TECHNICAL FIELD

This application relates to data synchronization.

### BACKGROUND

Network appliances that serve as remote data repositories can store data uploaded from a local client. Data stored in the remote data repositories can be modified, managed, shared with other clients, used to construct web pages etc. Published UK patent application GB2421606 A describes a collaborative document management system with global version control, in which a revised document is either identified as the authorative version of the document or identified as a new document, depending in whether certain criteria are met.

### SUMMARY

A method, computer program product and system in accordance with the present invention are set forth in claims 1, 4 and 7 respectively.

The subject matter described in this specification potentially can provide one or more advantages. For example, data synchronization as described in this specification may enable a client to obtain a snap shot of the data resources on a server and reconcile any updates since last access. In addition, the data synchronization may enable multiple clients to collaborate on common data resources (e.g., for a group webpage). Each of the collaborating clients can incorporate its changes without a conflict. Further, in response to a request to access a data resource, the up-to-date version of the requested data resource can be returned.

The subject matter described in this specification can be implemented as a method or as a system or using computer program products, tangibly embodied in information carriers, such as a CD-ROM, a DVD-ROM, a semiconductor memory, and a hard disk. Such computer program products may cause a data processing apparatus to conduct one or more operations described in this specification.

In addition, the subject matter described in this specification also can be implemented as a system including a processor and a memory coupled to the processor. The memory may encode one or more programs that cause the processor to perform one or more of the method acts described in this specification. Further the subject matter described in this specification can be implemented using various data processing machines.

### BRIEF DESCRIPTION OF THE DRAWINGS

FIG. 1 is a block diagram illustration of a sync system.

FIG. 2 is a diagram illustrating a hierarchical data structure.

FIG. 3 is a process flow diagram illustrating a process of creating and/or modifying one or more resources.

FIGS. 4a, 4b and 4c are process flow diagrams illustrating a process of synching data resource with a server.

Like reference symbols and designations in the various drawings indicate like elements.

### DETAILED DESCRIPTION

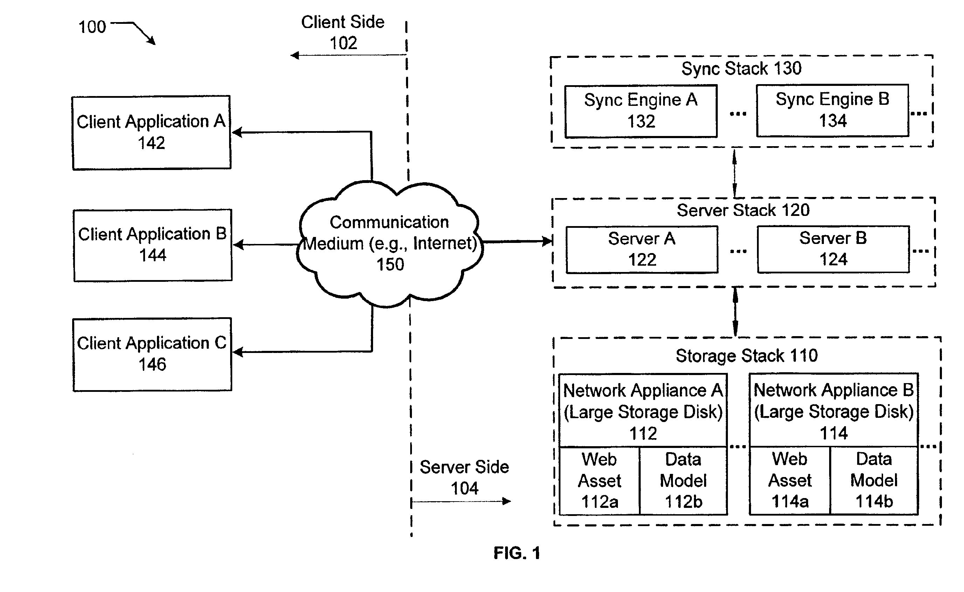

FIG. 1 is a block diagram of a sync system 100. The system includes a storage stack 110, a server stack 120 and a sync stack 130 on the server side 104. The storage stack 110 includes one or more network storage repositories (e.g., network appliances) 112, 114, etc. Operating on top of the network appliances are one or more layers of server stacks 120 that translate http requests (e.g., from one or more clients) that look like web browser requests and translate the requests to actual storage access. Each server stack 120 includes one or more servers 122, 124, etc. The server stack 120 enables the storage stack 110 to function as network disk drives (i.e., disk drivers in the sky.)

The components on the server side 104 (e.g., the server stack 120) are communicatively linked to one or more client applications 142, 144, 146, etc. on the client side 102, over a communication medium 150 such as the Internet. Examples of client applications include various software applications including web applications (e.g., a web browser), website creation tools, applications for importing/exporting content, content (e.g., video, photo, audio) editing software applications, e-mail proxy, etc. that contribute content to the server stack 120. Each client application 142, 144, 146, etc. has an account that enables access to the server stack 120 on the server side 104. Similar to mounting a local disk drive, the server side 104 storage stack 110 can be mounted through the server stack 120. Once mounted, the storage stack 120 operates like a remote file system.

Each network appliance 112,114, etc. stores individual web assets (data resources, such as digital content) 112a, 114a, etc. and a per server data model 112b, 114b, etc. that tie all of the assets together. When a client (e.g., 142) updates and writes into managed area of each storage disk 112 and 114, relationships among all the assets are updated. When another client (e.g., 144) requests access to the modified assets, the modified assets and relational information are provided to the requesting another client to indicate that the assets have been modified.

Operating on top of the server stack is the sync stack 130, which includes one or more sync engines 132, 134, etc. Each sync engine is a light weight per user database application that stores metadata describing the relational information of all stored assets to integrate all of the assets together. These sync engines 132, 134, etc. are server-side applications.

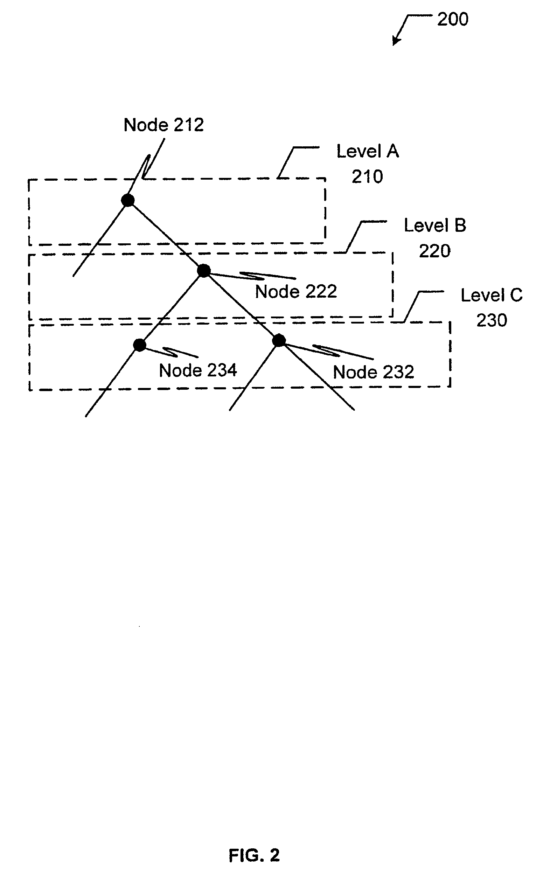

FIG. 2 is a data structure diagram 200 illustrating hierarchical relationships among the stored assets. The stored assets can be identified using a hierarchy of relationships among assets. The data structure 200 can be a tree that includes various levels 210, 220, and 230. The bottom most level 230 represents a child of the level above it, 220. The middle level 220 represents a child of the top level 210. In each level, one or more nodes 212, 222, 232 and 234 are provided to represent one or more members (siblings) in that level. Also, each node 212, 222, 232 and 234 represents each stored asset. A unique address such as a Uniform Resource Identifier (URI) can be used to identify each asset according to the hierarchical position in the data structure. A Uniform Resource Locator (URL) is a URI that identifies each asset and provides a primary access mechanism or network location. For example, the URL http://www.remote-storage.com/server1/resource1 is a URI that identifies the asset, resource1, and indicates that the asset can be obtained via HTTP from a network host named www.remote-storage.com. This is how a web browser sees and identifies each asset. The URI describes the network location based on the hierarchical position of the asset.

Such data structure based identifier may not be an ideal identifier for integrating the stored assets. For example, an asset may be moved to a new location by one client application while other client applications are offline, and when the other applications come online, the new location may not be known to them. Thus, in order to integrate all of the stored assets, a globally unique identifier is assigned to each asset. Such globally unique identifier is independent of the hierarchical position of each asset.

During collaborative work, multiple client applications 142, 144 and 146 may attempt to access and modify the same asset. When each client application 142, 144 or 146 uploads its modification to an asset, the modifications are synchronized to avoid conflicts among the other client applications 142, 144 and 146.

At least two classes of client applications may be allowed to upload assets (e.g., content) to a server (e.g., 122, 124). The first class of client application includes those that can be expected to follow certain conventions and protocols. This class of client application is referred to as a managed client. Examples of managed clients include a website creation tool, a content distribution tool, etc. A second class of client applications can contribute content to the server but does not have specific knowledge of the protocols. They are called unmanaged clients. Examples of unmanaged clients include the e-mail proxy content (e.g., movie) editing software. Both classes of clients are able to work seamlessly together in this system.

For managed clients there are at least two different kinds of data that can be synchronized. Managed clients can sync data that is relevant only to the client that uploaded the data. The data synced by managed clients can also be processed by carious client types. Data specific to a particular client application reside in a specific location (e.g., "/Library/Application Support/ClientName") on a server. This is the data needed to instantiate another instance of that client application on another host. When a new client application starts to sync for the first time, the new client receives all of its data from a client specific data store. Client data that can be used by different types of client applications reside in the web viewable section of the server.

Unmanaged clients can contribute content but cannot consume data produced by other clients. For example, the e-mail proxy provides a one-way bridge between an e-mail and the server. Content on the server does not flow back into the e-mail. Likewise, a website authoring tool may enable a user to publish uploaded assets but may not allow the user to subscribe to content on the server.

From a high-level, data synchronization on a client application 142, 144 and 146 is achieved by comparing a cached manifest with an up-to-date manifest on the server. This simple solution allows client sync code to detect adds, removes, modifies, and conflicts related to the stored assets. The server enables both managed and unmanaged clients to participate, and thus the manifest is dynamically generated upon request (e.g., request for read and/or write to content).

One aspect to this sync solution is the manifest. The manifest is a collection of data that represents the current state of some or all parts of the server (e.g., whether one or more stored assets have been modified). The manifest provides the following data for each asset stored in the server:
- URI: The absolute URI to this resource.
- Resource GUID: A globally unique identifier for this resource.
- Resource Version: A monotonically increasing version number.
- Property Version: A monotonically increasing version number.

Each asset is assigned a unique URI, a compact string of characters that identify or name the resource. This is how a web browser finds the resource. The Resource GUID is an unique identifier that is independent of the data structure (i.e., actual location of the asset). Thus the GUID enables the asset to be located without direct knowledge of the location of the asset. The Resource Version (or the content version number) is a linearly increasing number assigned to each asset. Each time the content of an asset is modified, the resource version number increases linearly to the next highest number (e.g., start at 1 and increases to 2, 3, 4, etc.) The Property Version (or the metadata version number) is also a linearly increasing number assigned to each asset. Each time the Web-based Distributed Authoring and Versioning (WebDAV or DAV) properties of the asset change, the property version number increases linearly. WebDAV refers to a set of extensions to the HTTP that enables multiple clients to collaboratively edit and manage files on remote World Wide Web servers.

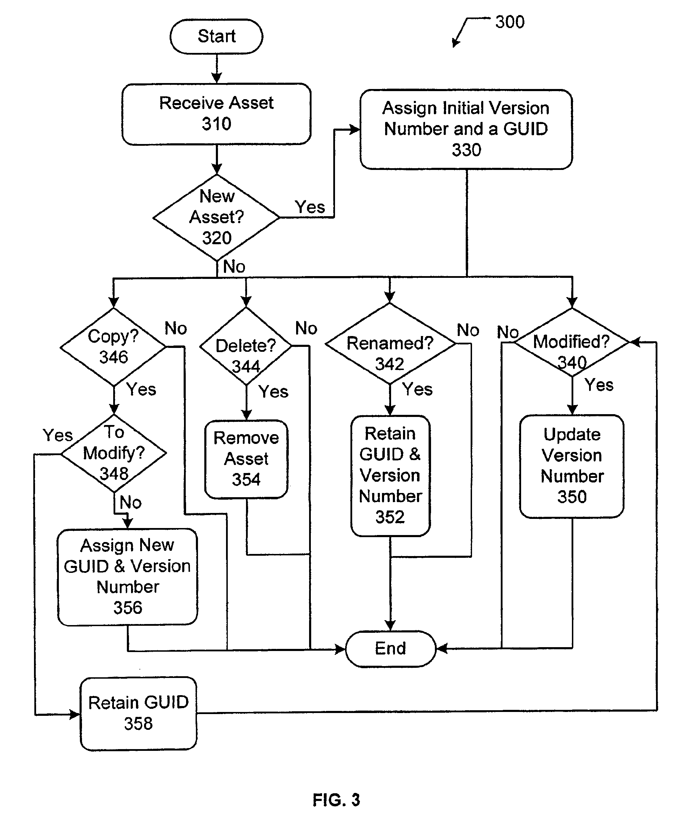

FIG. 3 is a process flow diagram that illustrates a process 300 for tracking a created and/or modified asset. An asset (e.g., a data resource such as web content) is uploaded (310) to a server (e.g., one of the servers 122, 124 in the server stack 120). The uploaded asset is analyzed to determine (320) whether the asset is a new asset (i.e., newly created and does not current exist on the server). For example, a lack of an assigned GUID and a resource version number indicate that the asset is newly created (i.e., newly uploaded to the server). When the uploaded asset is detected as a new asset, an initial resource version number (e.g., "1") and a globally unique identifier (GUID) are assigned (330) to the asset. The newly created asset is included in a manifest of all assets on the server. Table 1 shows an exemplary manifest entry generated for the newly created asset.

**Table 1: New Resource Manifest Entry:**

| |
|---|
| URI: /user1/Web/Sites/Blog/ |
| ResourceGUID: 8810bc4b-5b2d-4853-a233-d0d513fa6ba1 |
| ResourceVersion: 1 |
| PropertyVersion: 1 |

Once the GUID and the resource version number are assigned to the asset, modifications to the asset by one or more client applications 142, 144 and 146, for example, are tracked by updating the resource version number. When a modification to the content of the asset is detected (340), the resource version number is updated (350), e.g., by linearly incrementing to the next highest number. For the newly created asset with a resource version number of "1", the initial modification of the asset results in an updated resource version number of "2". Table 2 illustrates an updated resource version number for the asset created in Table 1.

**Table 1: Updated Resource Manifest Entry:**

| |
|---|
| URI: /user1/Web/Sites/Blog/ |
| ResourceGUID: 8810bc4b-5b2d-4853-a233-d0d513fa6ba1 |
| ResourceVersion: 2 |
| PropertyVersion: 1 |

In addition to modifying the resource version number for the asset in the manifest, the resource version number of all of the modified asset's parents can be modified. In other words, the update of the version number propagates upward from the modified asset to the root node in the manifest. For example, when the modified asset is a child of a parent asset and a grand child of a grandparent. The resource version number for the parent and grand parent assets are also updated.

Because the GUID and the resource version number are independent of a data structure or any other data, tracking the asset is simple even when the local identifiers (e.g., name of the asset, URL) for the asset changes. For example, when the asset is renamed (342), the existing GUID is retained for the renamed asset, and thus the asset can still be identified using the GUID and the resource version number. Since the content of asset has not been modified, the existing version number is retained (352).

When a resource deletion (344) of the asset is detected, the asset is removed (354) from the manifest. Deleting this child asset counts as a modification to the parent and grandparent assets. Thus, the resource version number of the parent and the grand parent assets (all the way up to the root of the data structure) are updated linearly.

When a resource copy (346) of the asset is detected, the destination asset is assigned (356) a new GUID and a new resource version number (and also a new property version number). However, in some implementations, the act of copying an asset can be the first step in modifying the asset. When a server side copy is detected for the purpose of modifying (348) the asset, the existing GUID is retained (358) for the copied version of the asset. When the copied version is modified (340), the resource version number is updated (350) when the modified copied version is uploaded. In this case the client receives an "add" event from the sync engine 132, 134.

In some implementations, a collection of assets can be renamed. When a collection of assets are renamed, the children GUIDs and resource version numbers stay the same but their URIs get updated. For example, when "/Home/Web/Sites/Blog" is renamed to "/user1/Web/Sites/Blog1", the manifest is modified to reflect this change for all children assets. The URI property in the manifest for all children are changed to this new location base, "/user1/Web/Sites/Blog1".

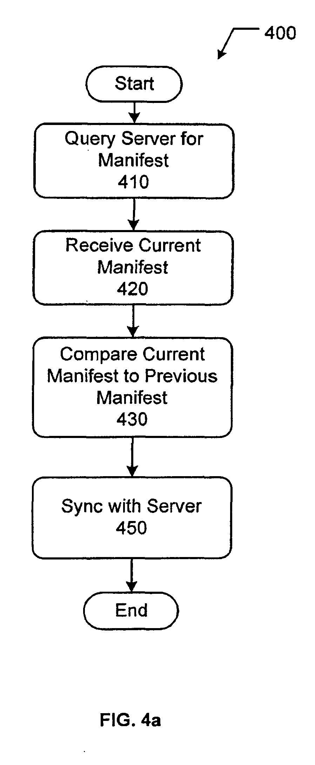

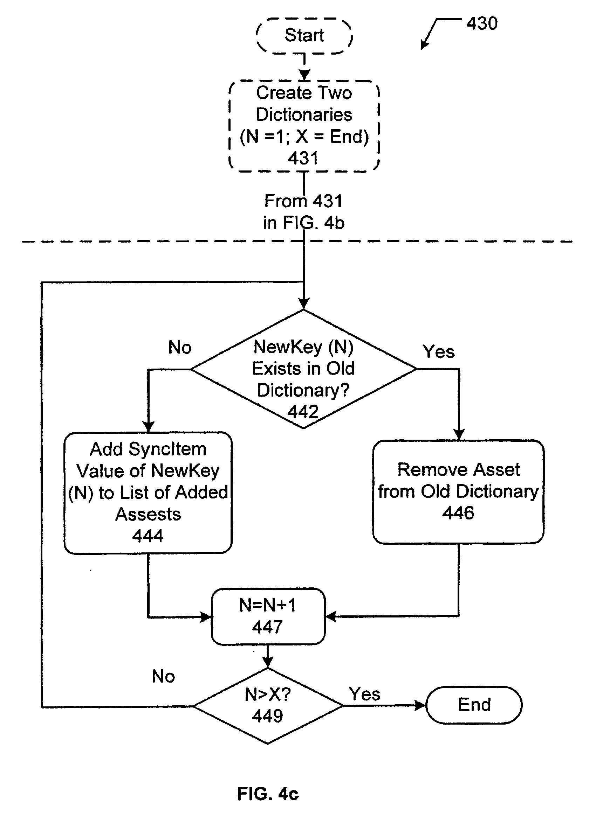

FIG. 4a is a process flow diagram illustration a process 400 of comparing a cached manifest with a current manifest to sync modifications to one or more assets. The manifest for any asset or a collection of assets are dynamically generated in response to one or more client applications 142, 144, 146 issuing a query to the server. For example, a client application 142, 144, 146 can request a read and/or write of an asset or a collection of assets, and in response to the request, the server is queried (410) to obtain the manifest (420). The result of this query is returned using a data structure that allows for each comparison of key-value pairs. For example, documents using RSS2.0 and/or Atom, with proper extensions can be returned. Comparing (430) a previous (i.e., cached) manifest with the current manifest enables client applications 142, 144, 146 to make decisions on how best to sync up (430) with the server. The high-level data structure for either Atom or RSS2 is an array of dictionaries. This simple structure of Atom or RSS2 enables the server-side applications (e.g., sync engines 132, 134. etc.) to perform a "diff' operation to determine a difference between the previously cached manifest and the current manifest.

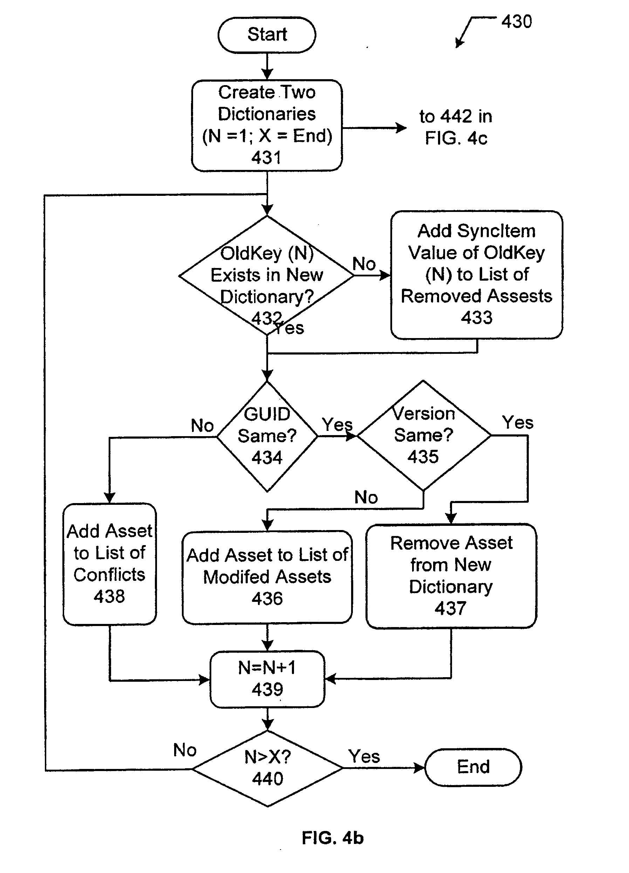

Comparing (430) the previous and current versions of the manifest to synchronizing (450) with a server is further described in FIG. 4b. While the following describes a key-centric solution, other solutions such as a GUID-centric solution can also be implemented. For example, in the following key-centric solution, assigned GUIDs are used to detect renaming of assets. In a GUID-centric solution, the process can be inverted and the keys can be used to resolve and detect renames.

Two dictionaries are created (431), one with old list of assets (from previous manifest) and one with the newer list of assets (from current manifest). A type-independent solution includes constructing the dictionaries with a key-value pair that uses a Key + Syncltem pair. The Key in this case is the canonical server URL for each asset. The value, Syncltem, is an object that encapsulates all of the metadata needed to sync the asset with the server. The encapsulated metadata includes the GUID and the resource version number for the asset. After creating the two dictionaries, the process 430 iterates over the set of keys in the old dictionary. The iteration includes comparing each OldKey (starting with the first OldKey(N, N=1)) in the old dictionary with the new dictionary to determine (432) whether or not that OldKey exists in the new dictionary. When the OldKey does not exist in the new dictionary, the Syncltem (metadata) value of that OldKey is added (433) to a list of removed assets. For example, the list of removed assets can be called "removedFromNewer".

When the OldKey does exist in the new dictionary, the GUID for the asset in the old dictionary is compared against the GUIDs in the new dictionary to determine (434) whether or not a matching GUID exists in the new dictionary. When the GUIDs match, the resource versions are also verified (435) to be the same. When the resource version numbers are different, that asset is added (436) to a list of modified assets. When the resource version numbers are the same, the OldKey (and the asset) is removed (437) from the iterative process 430 and from the new dictionary. Similar logic can be used to detect when properties of assets have changed.

When detected that the OldKey does exist in the new dictionary, the GUID for the asset in the old dictionary is checked against the GUID in the new dictionary to identify (434) a match. When the GUIDs are not the same (not a match), the asset with non-matching GUID is added (438) to a list of conflicts. Such conflicts can occur when the server removes an entry and then creates an entry with the same name.

When the OldKey does not exist in the new dictionary and the GUID of the asset in the old dictionary match the GUID in the new dictionary, the resource version numbers are also verified (435) to detect a match. When detected that the version number does not match, the asset is added to the list of modifies.

When the OldKey does not exist in the new dictionary, the GUID for the asset is checked to determined (434) whether the GUID exists in the new dictionary. When the GUIDs match, the resource version numbers are compared (435) for a match. When the resource version numbers also match, the asset with the matching GUID and resource version number is removed from the current iteration list of assets and the new dictionary. When the key does not match, but the GUID and the version number match, the asset has been moved but not modified.

The next OldKey is identified (438) to determine whether all of the OldKeys have been processed (439). When determined that not all of the OldKeys have been processed, the iterative process 430 continues to check (432) the next OldKey.

Also, each NewKey in the new dictionary is checked to determine (442) whether or not that key exists in the old dictionary. When the NewKey does not exist in the old dictionary, the Syncltem value of the NewKey is added (444) to a list of added assets called "addedToNewer". This asset has been added since the previous query.

Otherwise, when the NewKey exists in the old dictionary, the GUID and the resource version number are compared and verified as described with respect to iterating trough the OldKeys. Once compared, the asset associated with the matching NewKey is removed (446) from both the iteration list and the old dictionary. This avoids having to review the asset when iterating through the OldKeys after iterating through the NewKeys. The next NewKey is identified (447), and a determination is made on whether all of the NewKeys have been processed (449). When determined that not all NewKeys have been processed, the iterative process 430 continues to check (442) the next NewKey.

In some implementations, when the OldKeys are iterated through first, those assets with matching keys are removed from the new dictionary to avoid having to review those assets again.

At the end of the iterative process 430 four lists are obtained: (1) removedFromNewer; (2) addedToNewer; (3) conflicts; and (4) modifies. These lists are processed to sync the assets with the server using the Syncltem values. For example, the each asset in the removedFromNewer list is removed locally (client side). Each asset in the addedToNewer list is added locally. Each assets in the conflicts list is process to determine how to resolve the conflict. Each asset in the modified list are processed determine how to update the local data model for each asset.

Thus, each asset that gets added to certain part of the server 122, 124 gets versioned. Two fundamental aspects are implemented. One, the GUID enables each asset to be uniquely identified. The GUID for each asset is assigned by the server 122, 124 when the asset is added to the server. By assigning a GUID to each asset, a conflict is avoided when a client (e.g., 142, 144 or 146) attempts to identify a resource that has been moved since the GUID is retained for the moved asset. Thus, the use of GUID avoids having to download and re-upload each asset.

Second, a linear, monatomically increasing resource version number is also assigned to each asset to enable the client applications 142, 144, 146 to build-up a simple data structure and determine quickly what has changed. Data structure implemented can be any data structure that enables an efficient and simple comparison of key-value pairs. For example, Atom is essentially a dictionary, and it is trivial to synchronize dictionaries. A left hand side and a right hand side are created as old version and new version. Using such two versions, adds, deletes and modifies to the assets are implemented effectively as described with respect to FIGS. 4a-c.

Data synchronization enables two distinct clients (e.g., a website authoring tool, a content sharing application, etc) to distinguish and efficiently determine what changed. In addition, data synchronization as described in this specification is useful in various situations, such as during collaborative updates among various client applications. For example, a client application 142, 144 or 146 can make a local (client side) copy of the asset and modify the asset offline. When the client reconnects to the server and uploads the modified asset, the server is queried to obtain a new manifest. When the content of the asset is detected to be modified, the resource version number in increased linearly to the next highest number (for example, from "1" to "2"). Also, when the properties for that asset are updated the property version number and the resource version are bumped up to the next highest number.

In some implementations, other sub-resource versions, such as comments, can be tracked and synchronized. Note that the property version number depends on the overall resource version number. Also, client applications 142, 144, and 146 operate on resource version number. The property version number are tested for equality and not relied on as a strict version number of each asset.

Data synchronization can be implemented as a polling based mechanism. For example, basic http "if-modified-since" semantics are used on a data synchronization feed to determine whether or not anything under a particular hierarchy has changed. In response to a query, a tuple of the GUID, resource version number and the requested resource is returned. Thus, a unique identifier is returned to determine whether that requested resource or other resources underneath the requested resource has changed. Any client applications that support standard e-tags or modified sense semantics can interpret the unique identifier.

Data synchronization as described in this specification can also be used to build-up dynamic web pages. For example, a mobile phone can contribute to a bucket of data on a server, and have the contributed data automatically appear on a web page without additional changes to the codes of the web page. Essentially, JavaScript resides inside the web page and the JavaScript makes the same kind of query. The display format is optimized for the consumer using JSON (JavaScript Object Notation). JavaScript can process JSON better than XML. Using JSON, client applications 142, 144, 146 can obtain live view (e.g., up to the second the client applications make the query) of the state of the file system on the server 122, 124. The trick with JSON view is that the data is not displayed in a hierarchical nature. When the file system listing is returned (e.g., using the manifest), the returned view is optimized for the kind of view desired by the client applications 142, 144 and 146. Included in the returned view are certain properties and metadata needed to construct the webpage.

The data synchronization feeds are also used for providing other non-web browser based clients access to the assets. In response to a GET request to the server, all of the data associated with the requested asset is provided in a single shot without incurring massive amount of I/O or recursion into a file system on the server 122, 124.

Also, the data synchronization described in this specification can be used to implement a subscription to a feed, a natural use of a feed using a feed reader. For example, when a first user has a photo gallery and a second user clicks on the feed link, the up-to-date data is provided in appropriate format, such as RSS2, Atom, etc.

In some implementations, a client application 142, 144, 146 can request a lock on the requested asset. The lock guarantees that the asset will not be modified after the lock is achieved. Once one client application obtains a lock, additional requests for lock from other client applications are denied. Alternatively, an optimistic lock can be provided by using a conditional custom header. A conditional custom header may state that if asset has not been modified, go do this. The locking mechanism and the conditional custom header can be used in a GET request. The lock request fails when the requested data has changed in the server after the request.

In some implementations, a persistent Asynchronous JavaScript and XML (AJAX) connection and polling can be used to obtain e-tags of any changes to the assets on the server. And based on the determined changes, a webpage can be refreshed.

For example, in homepage file sharing, a server side process may need to know the status of a particular file, collection or an entire hierarchy of resources. The server side process may need to understand, when a user requests to create new bin X of a particular directory, whether or not a particular header file exists. In stead of receiving a lot of irrelevant data, data synchronization as described in this specification can be implemented to query a particular resource, a collection of resources, or an entire hierarchy of resources to return only the relevant URLs.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer program products, i.e., one or more modules of computer program instructions encoded on a tangible program carrier for execution by, or to control the operation of, data processing apparatus. The tangible program carrier can be a propagated signal or a computer readable medium. The propagated signal is an artificially generated signal, e.g., a machine-generated electrical, optical, or electromagnetic signal, that is generated to encode information for transmission to suitable receiver apparatus for execution by a computer. The computer readable medium can be a machine-readable storage device, a machine-readable storage substrate, a memory device, a composition of matter effecting a machine-readable propagated signal, or a combination of one or more of them.

The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, or declarative or procedural languages, and it can be deployed in any form, including as a stand alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, input from the user can be received in any form, including acoustic, speech, or tactile input.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described is this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Only a few implementations and examples are described and other implementations, enhancements and variations can be made based on what is described and illustrated in this application.

## Claims

1. A method comprising:
receiving one or more data resources;
assigning a resource version number, a property version number, and a unique identifier to each data resource not already assigned to an existing unique identifier;
when one or more modifications to the contents of the one or more uniquely identified data resources are detected, updating the assigned resource version number for the modified data resource; and
propagating the updated resource version number from the modified data resource to at least one parent data resource of the modified data resource to update the resource version number for the parent data resource.

2. The method of claim 1, further comprising in response to a request to access the one or more uniquely identified data resource, providing the assigned unique identifier, resource version number and property version number of the requested data resource to determine whether the requested data resource has been modified since a previous request.

3. The method of claim 1, wherein detecting the one or more modifications to the one or more uniquely identified data resources comprises:
detecting a modification to the properties of the one or more uniquely identified data resources; and
updating the property version number of the modified resource.

4. A computer program product, embodied on a computer-readable medium, operable to cause a data processing apparatus to perform operations comprising:
receive one or more data resources;
assign a resource version number, a property version, and a unique identifier to each data resource not already assigned to an existing unique identifier;
when one or more modifications to the contents of the one or more uniquely identified data resources are detected, update the assigned resource version number for the modified data resource; and
propagate the updated resource version number from the modified data resource to at least one parent data resource of the modified data resource to update the resource version number for the parent data resource.

5. The computer program product of claim 4, further operable to cause the data processing apparatus to perform operations comprising:
in response to a request to access the one or more uniquely identified data resource, provide the assigned unique identifier, resource version number and property version number of the requested data resource to determine whether the requested data resource has been modified since a previous request.

6. The computer program product of claim 4, further operable to cause the data processing apparatus to detect the one or more modifications to the one or more uniquely identified data resources comprising causing the data processing apparatus to detect a modification to the properties of the one or more uniquely identified data resources; and
updating the property version number of the modified resource.

7. A system comprising:
one or more server-side applications coupled to one or more servers, wherein the one or more server side applications are configured to perform operations comprising:
receive one or more data resources,
assign a resource version number, a property version number, and a unique identifier to each uploaded data resource not already assigned to an existing unique identifier,
detect one or more modifications to the contents of the one or more uniquely identified data resources,
update the assigned resource version number for the modified data resource, and
propagate the updated resource version number from the modified data resource to at least one parent data resource of the modified data resource to update the resource version number for the parent data resource; and
one or more storage devices communicatively coupled to the one or more servers, wherein the one or more storage devices are configured to maintain a database of the assigned identifier, the resource version number and the property version number for each data source.

8. The system of claim 7, wherein the one or more server-side applications are further configured to
detect one or more modifications to the properties of the one or more uniquely identified data resources; and
update the assigned property version number for the modified data resource.

9. The system of claim 7, wherein
the one or more servers are configured receive from one or more client applications a request to access the one or more data resources; and
the one or more server-side applications are configured to provide to the requesting client application the unique identifier, the resource version number and the property version number assigned to the requested data resource to determine whether the requested data resource has been modified since a previous request.

10. The method of claim 1, comprising:
in response to the detected one or more modifications to the contents of the one or more uniquely identified data resources, updating relationships among the related resources.

11. The method of claim 1, wherein the unique identifier is independent of a data structure or any other data.

12. The computer program product of claim 4, wherein the detected one or more modifications comprise deleting one of the received data resources; and
the computer program product is operable to cause a data processing apparatus to update the version number of all data resource related to the deleted data resource in response to deleting the received data resource.

13. The computer program product of claim 4, operable to cause a data process apparatus to rename one of the received data resources without changing the assigned unique identifier.

14. The system of claim 7, wherein the one or more server-side applications are configured to assign a name indicative of a data structure to each data resource not yet assigned a name in addition to the unique identifier that is independent of the data structure.

15. The system of claim 14, wherein the one or more server-side applications are configured to receive multiple requests from different clients to modify the same data resource; and
synchronizing the multiple requests to avoid conflicts.

## Patentansprüche

1. Verfahren aufweisend:
Empfangen einer oder mehrerer Datenressourcen;
Zuweisen einer Ressourcen-Versionsnummer, einer Eigenschafts-Versionsnummer und einer eindeutigen Kennung an jede Datenressourcen, welcher nicht bereits eine existierende eindeutige Kennung zugewiesen wurde;
wenn ein oder mehrere Modifikationen der Inhalte der einen oder mehreren eindeutig identifizierten Datenressourcen detektiert werden, Aktualisieren der zugewiesenen Ressourcen-Versionsnummer für die modifizierten Datenressourcen; und
Verbreiten der aktualisierten Ressourcen-Versionsnummer aus den modifizierten Datenressourcen an zumindest eine Eltern-Datenressource der modifizierten Datenressourcen zum Aktualisieren der Ressourcen-Versionsnummer der Eltern-Datenressourcen.

2. Verfahren nach Anspruch 1, weiterhin aufweisend in Antwort auf eine Anfrage zum Zugreifen auf die eine oder die mehreren eindeutigen identifizierten Datenressourcen, Bereitstellen der zugewiesenen eindeutigen Kennung, Ressourcen-Versionsnummer und Eigenschafts-Versionsnummer der angefragten Datenressourcen zum Bestimmen, ob die angefragte Datenressource seit einer vorherigen Anfrage modifiziert worden ist.

3. Verfahren nach Anspruch 1, wobei das Detektieren der einen oder der mehreren Modifikationen der einen oder der mehreren eindeutigen identifizierten Datenressourcen aufweist:
Detektieren einer Modifikation der Eigenschaften der einen oder der mehreren eindeutig identifizierten Datenressourcen; und
Aktualisieren der Eigenschafts-Versionsnummer der modifizierten Ressourcen.

4. Computer-Programmprodukt, welches auf einem computerlesbares Medium verkörpert ist, betriebsfähig zum Veranlassen einer Datenverarbeitungsvorrichtung, Operationen auszuführen aufweisend:
Empfangen einer oder mehrerer Datenressourcen;
Zuweisen einer Ressourcen-Versionsnummer, einer Eigenschafts-Versionsnummer und einer eindeutigen Kennung an jede Datenressource, welcher nicht bereits eine existierende eindeutige Kennung zugewiesen wurde;
wenn ein oder mehrere Modifikationen der Inhalte der einen oder der mehreren eindeutig identifizierten Datenressourcen detektiert werden, Aktualisieren der zugewiesenen Ressourcen-Versionsnummer für die modifizierten Datenressourcen; und
Verbreiten der aktualisierten Ressourcen-Versionsnummer aus den modifizierten Datenressourcen an zumindest eine Eltern-Datenressource der modifizierten Datenressourcen zum Aktualisieren der Ressourcen-Versionsnummer der Eltern-Datenressourcen.

5. Computer-Programmprodukt nach Anspruch 4, weiterhin betriebsfähig zum Veranlassen der Datenverarbeitungsvorrichtung, Operationen auszuführen aufweisend:
in Antwort auf eine Anfrage zum Zugreifen auf die eine oder die mehreren eindeutigen identifizierten Datenressourcen, Bereitstellen der zugewiesenen eindeutigen Kennung, Ressourcen-Versionsnummer und Eigenschafts-Versionsnummer der angefragten Datenressourcen zum Bestimmen, ob die angefragte Datenressource seit einer vorherigen Anfrage modifiziert worden ist.

6. Computer-Programmprodukt nach Anspruch 4, weiterhin betriebsfähig zum Veranlassen der Datenverarbeitungsvorrichtung, eine oder mehrere Modifikationen der einen oder der mehreren eindeutigen identifizierten Datenressourcen zu detektieren aufweisend Veranlassen der Datenverarbeitungsvorrichtung eine Modifikation der Eigenschaften der einen oder der mehreren eindeutig identifizierten Datenressourcen zu detektieren; und Aktualisieren der Eigenschafts-Versionsnummer der modifizierten Ressourcen.

7. System aufweisend:
eine oder mehrere serverseitige Anwendungen, welche mit einem oder mehreren Servern gekoppelt ist/sind, wobei die eine oder die mehreren serverseitigen Anwendungen eingerichtet sind zum Ausführen der Operationen aufweisend:
Empfangen einer oder mehrerer Datenressourcen;
Zuweisen einer Ressourcen-Versionsnummer, einer Eigenschafts-Versionsnummer und einer eindeutigen Kennung an jede hochgeladene Datenressource, welcher nicht bereits eine existierende eindeutige Kennung zugewiesen wurde;
Detektieren einer oder mehrerer Modifikationen des Inhalts der einen oder der mehreren eindeutig identifizierten Datenressourcen;
Aktualisieren der Eigenschafts-Versionsnummer der modifizierten Datenressourcen; und
Verbreiten der Aktualisierten Ressourcen-Versionsnummer aus den modifizierten Datenressourcen an zumindest eine Eltern-Datenressource der modifizierten Datenressourcen zum Aktualisieren der Ressourcen-Versionsnummer für die Eltern-Datenressourcen; und
ein oder mehrere Speichergeräte, welche mit den einen oder den mehreren Servern kommunikativ gekoppelt sind, wobei die einen oder die mehreren Speichergeräte eingerichtet sind zum Beibehalten einer Datenbank der zugewiesenen Kennungen, der Ressourcen-Versionsnummer und der Eigenschafts-Versionsnummer für jede Datenquelle.

8. System nach Anspruch 7, wobei die einen oder die mehreren serverseitigen Anwendungen weiterhin eingerichtet sind zum Detektieren einer oder mehrerer Modifikationen der Eigenschaften der einen oder der mehreren eindeutig identifizierten Datenressourcen; und
Aktualisieren der zugewiesenen Eigenschafts-Versionsnummer der modifizierten Datenressourcen.

9. System nach Anspruch 7, wobei
der eine oder die mehreren Server eingerichtet sind zum Empfangen einer Anfrage zum Zugreifen auf die eine oder die mehreren Datenressourcen von einem oder mehreren Client-Anwendungen; und
die eine oder die mehreren serverseitigen Anwendungen eingerichtet sind zum Bereitstellen der eindeutigen Kennung, der Ressourcen-Versionsnummer und der Eigenschafts-Versionsnummer, welche den angefragten Datenressourcen zugewiesenen sind, an die anfragende Client-Anwendung, um zu bestimmen, ob die angefragte Datenressource seit einer vorherigen Anfrage modifiziert worden ist.

10. Verfahren nach Anspruch 1 aufweisend:
in Antwort auf die detektierten ein oder mehreren Modifikationen der Inhalte der ein oder mehreren eindeutigen identifizierten Datenressourcen, Aktualisieren der Beziehungen unter den verbundenen Ressourcen.

11. Verfahren nach Anspruch 1, wobei die eindeutige Kennung unabhängig von einer Datenstruktur oder irgendwelchen anderen Daten ist.

12. Computer-Programmprodukt nach Anspruch 4, wobei die detektierten ein oder mehreren Modifikationen das Löschen einer der empfangenen Datenressourcen umfassen; und
das Computer-Programmprodukt betriebsfähig ist, eine Datenverarbeitungsvorrichtung zu veranlassen, die Versionsnummer aller Datenressourcen zu aktualisieren, welche mit der gelöschten Datenressource verbunden sind, in Antwort auf das Löschen der empfangenen Datenressourcen.

13. Computer-Programmprodukt nach Anspruch 4 betriebsfähig, eine Datenverarbeitungsvorrichtung zu veranlassen, einige der empfangenen Datenressourcen umzubenennen, ohne die zugewiesene eindeutige Kennung zu verändern.

14. System nach Anspruch 7, wobei die eine oder die mehreren serverseitigen Anwendungen eingerichtet sind zum Zuweisen eines Namens, welcher eine Datenstruktur anzeigt, an jede Datenressource, welcher nicht bereits ein Name zugewiesen wurde, zusätzlich zu der eindeutigen Kennung, welche unabhängig von der Datenstruktur ist.

15. System nach Anspruch 14, wobei die eine oder die mehreren serverseitigen Anwendungen eingerichtet sind zum Empfangen mehrerer Anfragen von unterschiedlichen Clients, die gleichen Datenressourcen zu modifizieren; und
Synchronisieren der mehreren Anfragen, um Konflikte zu vermeiden.

## Revendications

1. Un procédé comprenant :
la réception d'une ou plusieurs ressources de données ;
l'attribution d'un numéro de version de ressource, d'un numéro de version de propriété et d'un identifiant unique à chaque ressource de données à laquelle n'a pas encore été attribué un identifiant unique existant ;
lorsque sont détectées une ou plusieurs modifications du contenu des une ou plusieurs ressources de données identifiées de façon unique, la mise à jour du numéro de version de ressource attribué à la ressource de données modifiées ; et
la propagation du numéro de version de ressource mis à jour depuis la ressource de données modifiée vers au moins une ressource de données parente de la ressource de données modifiée pour mettre à jour le numéro de version de ressource de la ressource de données parente.

2. Le procédé de la revendication 1, comprenant en outre en réponse à une requête d'accès à la une ou plusieurs ressources de données identifiées de façon unique, la délivrance de l'identifiant unique, du numéro de version de ressource et du numéro de version de propriété attribués à la ressource de données requise pour déterminer si la ressource de données requise a été ou non modifiée depuis une requête précédente.

3. Le procédé de la revendication 1, dans lequel la détection des une ou plusieurs modifications des une ou plusieurs ressources de données identifiées de façon unique comprend :
la détection d'une modification des propriétés des une ou plusieurs ressources de données identifiées de façon unique ; et
la mise à jour du numéro de version de propriété de la ressource modifiée.

4. Un programme-produit informatique, incorporé à un support lisible par calculateur, pouvant être mis en oeuvre pour faire en sorte qu'un appareil de traitement de données effectue des opérations comprenant :
la réception d'une ou plusieurs ressources de données ;
l'attribution d'un numéro de version de ressource, d'un numéro de version de propriété et d'un identifiant unique à chaque ressource de données à laquelle n'a pas encore été attribué un identifiant unique existant ;
lorsque sont détectées une ou plusieurs modifications du contenu des une ou plusieurs ressources de données identifiées de façon unique, la mise à jour du numéro de version de ressource attribué à la ressource de données modifiées ; et
la propagation du numéro de version de ressource mis à jour depuis la ressource de données modifiée vers au moins une ressource de données parente de la ressource de données modifiée pour mettre à jour le numéro de version de ressource de la ressource de données parente.

5. Le programme-produit informatique de la revendication 4, pouvant être en outre mis en oeuvre pour faire en sorte que l'appareil de traitement de données effectue des opérations comprenant :
en réponse à une requête d'accès à la une ou plusieurs ressources de données identifiées de façon unique, la délivrance de l'identifiant unique, du numéro de version de ressource et du numéro de version de propriété attribués à la ressource de données requise pour déterminer si la ressource de données requise a été ou non modifiée depuis une requête précédente.

6. Le programme-produit informatique de la revendication 4, pouvant être en outre mis en oeuvre pour faire en sorte que l'appareil de traitement de données détecter les une ou plusieurs modifications des une ou plusieurs ressources de données identifiées de façon unique, comprenant le fait de faire en sorte que l'appareil de traitement de données détecte une modification des propriétés des une ou plusieurs ressources de données identifiées de façon unique ; et
la mise à jour du numéro de version de propriété de la ressource modifiée.

7. Un système comprenant :
une ou plusieurs applications côté serveur couplées à un ou plusieurs serveurs, les une ou plusieurs applications côté serveur étant configurées pour effectuer des opérations comprenant :
la réception d'une ou plusieurs ressources de données,
l'attribution d'un numéro de version de ressource, d'un numéro de version de propriété et d'un identifiant unique à chaque ressource de données télétransmise auxquelles n'a pas encore été attribué un identifiant unique existant,
la détection d'une ou plusieurs modifications du contenu des une ou plusieurs ressources de données identifiées de façon unique,
la mise à jour du numéro de version de ressource attribué à la ressource de données modifiée, et
la propagation du numéro de version de ressource mis à jour depuis la ressource de données modifiée vers au moins une ressource de données parente de la ressource de données modifiée pour mettre à jour le numéro de version de ressource de la ressource de données parente ; et
un ou plusieurs dispositifs de mémorisation couplés de manière communicante aux un ou plusieurs serveurs, les un ou plusieurs dispositifs de mémorisation étant configurés pour gérer une base de données de l'identifiant attribué, du numéro de version de ressource et du numéro de version de propriété pour chaque source de données.

8. Le système de la revendication 7, dans lequel les une ou plusieurs applications côté serveur sont en outre configurées pour :
la détection d'une ou plusieurs modifications des propriétés des une ou plusieurs ressources de données identifiées de façon unique ; et
la mise à jour du numéro de version de propriété attribué à la ressource de données modifiée.

9. Le système de la revendication 7, dans lequel :
les un ou plusieurs serveurs sont configurés pour recevoir d'une ou plusieurs applications clientes une requête d'accès aux une ou plusieurs ressources de données ; et
les une ou plusieurs applications côté serveur sont configurées pour délivrer à l'application cliente requérante l'identifiant unique, le numéro de version de ressource et le numéro de version de propriété attribués à la ressource de données requise pour déterminer si la ressource de données requise a ou non été modifiée depuis une requête antérieure.

10. Le procédé de la revendication 1, comprenant :
en réponse à la détection d'une ou plusieurs modifications du contenu des une ou plusieurs ressources de données identifiées de façon unique, la mise à jour des relations entre les ressources apparentées.

11. Le procédé de la revendication 1, dans lequel l'identifiant unique est indépendant d'une structure de données ou de toute autre donnée.

12. Le programme-produit informatique de la revendication 4, dans lequel les une ou plusieurs modifications détectées comprennent l'effacement de l'une des ressources de données reçues ; et
le programme-produit informatique peut être mis en oeuvre pour faire en sorte qu'un appareil de traitement de données mette à jour le numéro de version de toutes les ressources de données apparentées à la ressource de données effacée en réponse à l'effacement de la ressource de données reçue.

13. Le programme-produit informatique de la revendication 4, pouvant être mis en oeuvre pour faire en sorte qu'un appareil de traitement de données renomme l'une des ressources de données reçues sans modifier l'identifiant unique attribué.

14. Le système de la revendication 7, dans lequel les une ou plusieurs applications côté serveur sont configurées pour attribuer un nom représentatif d'une structure de données à chaque ressource de données à laquelle n'a pas encore été attribué un nom, en plus de l'identifiant unique qui est indépendant de la structure de données.

15. Le système de la revendication 14, dans lequel les une ou plusieurs applications côté serveur sont configurées pour recevoir les requêtes multiples provenant de clients différents pour modifier la même ressource de données ; et
synchroniser les requêtes multiples pour éviter des conflits.
